# EUROPÄISCHE PATENTSCHRIFT

(11) **EP 3 136 268 B1**
(45) Veröffentlichungstag und Bekanntmachung des Hinweises auf die Patenterteilung: **19.06.2019**
(21) Anmeldenummer: 15183113.8
(22) Anmeldetag: 31.08.2015
(51) Int. Cl.: G06F 17/50, G06F 21/55, G06F 21/57, G06F 21/60, G06F 21/70, G06F 21/71, G06F 21/76

(54) **VERFAHREN ZUR SICHERHEITSANALYSE EINER LOGISCHEN SCHALTUNG**
METHOD FOR ANALYZING THE SECURITY OF A LOGIC CIRCUIT
PROCEDE D'ANALYSE DE SECURITE D'UN CIRCUIT LOGIQUE

(43) Veröffentlichungstag der Anmeldung: 01.03.2017
(73) Patentinhaber: Siemens Aktiengesellschaft, 80333 München (DE)
(72) Erfinder: FISCHER, Bernhard, 1120 Wien (AT); MATSCHNIG, Martin, 3430 Tulln (AT); TAUCHER, Herbert, 2340 Mödling (AT)
(74) Vertreter: Maier, Daniel Oliver

(56) Entgegenhaltungen:
- JOHANNES LOINIG ET AL: "Idea: Simulation Based Security Requirement Verification for Transaction Level Models", 9. Februar 2011 (2011-02-09), ENGINEERING SECURE SOFTWARE AND SYSTEMS, SPRINGER BERLIN HEIDELBERG, BERLIN, HEIDELBERG, PAGE(S) 264 - 271, XP019160353, ISBN: 978-3-642-19124-4 * Seiten 266-269 * * Abbildungen 1,2,3 *
- Yves Roudier ET AL: "SysML-Sec: A SysML environment for the design and development of secure embedded systems", , 1. Januar 2013 (2013-01-01), XP055249349, Gefunden im Internet: URL:http://perso.telecom-paristech.fr/~apv rille/docs/APCOSEC2013_ApvrilleRoudier.pdf [gefunden am 2016-02-11]
- JOHANNES LOINIG ET AL: "Towards formal system-level verification of security requirements during hardware/software codesign", SOC CONFERENCE (SOCC), 2010 IEEE INTERNATIONAL, IEEE, 27. September 2010 (2010-09-27), Seiten 388-391, XP031880663, DOI: 10.1109/SOCC.2010.5784702 ISBN: 978-1-4244-6682-5

## Beschreibung

Die vorliegende Erfindung betrifft allgemein das Gebiet der elektronischen logischen Schaltungen, insbesondere der integrierten Schaltungen wie z.B. der so genannten anwendungsspezifischen, integrierten Schaltungen oder ASICs, der so genannten Field Programmable Gate Arrays oder FPGAs und der so genannten System-on-Chip-Systeme. Im Speziellen bezieht sich die vorliegende Erfindung auf ein computergestütztes Verfahren zur Analyse einer logischen Schaltung, welche mehrere Komponenten und Kanäle zum Austausch von Daten zwischen Komponenten umfasst, wobei für eine Simulation einer Funktionsweise der logischen Schaltung jeder Komponente und jedem Kanal in einem Schaltungsmodell funktionale Eigenschaften zugeordnet werden.

Logische Schaltungen werden in zahlreichen elektrischen und elektronischen Geräten bzw. Systemen eingesetzt. Solche Schaltungen umfassen in der Regel ein Substrat (z.B. einem Halbleitersubstrat), auf dem unterschiedliche Bauelemente oder Bauelementblöcke untergebracht und miteinander verdrahtet sind. Diese Bauelemente bzw. Bauelementblöcke werden auch als Komponenten bezeichnet. Eine integrierte Schaltung besteht üblicherweise aus einer Anzahl verschiedener Komponenten, welche auf einem einkristallinen Substrat untergebracht sind. Sind alle oder ein großer Teil der gewünschten Funktionen auf einem Chip verwirklicht, spricht man von einem System-on-Chip. Mittels dieser Integration stehen umfangreiche Funktionalitäten und Anwendungen auf kleinstem Raum zur Verfügung. Durch den raschen Fortschritt in der technologischen Entwicklung besteht heute die Möglichkeit, komplexe logische Schaltungen mit einer großen Anzahl an Komponenten auf einem einzigen Halbleiter-Chip unterzubringen.

Entworfen werden solche komplexen Schaltungen üblicherweise mittels rechnergestützter Hilfsmittel. Dabei erfolgt zunächst die Erstellung eines virtuellen Schaltungsmodells, um eine gewünschte Funktionsweise zu simulieren. Konkret wird jede Komponente (Hardwarekomponenten; Systemkomponenten, welche aus Hardware- und Softwareanteilen bestehen, etc.) durch ein funktionales Komponentenmodell dargestellt, um daraus ein Schaltungsmodell der logischen Schaltung bzw. des logischen Systems aufzubauen. Anhand dieses Schaltungsmodells ist mittels Simulation eine Funktionalität der entsprechenden Schaltung überprüfbar und verifizierbar. Das gilt insbesondere für ein Schaltungsmodell mit hohem Abstraktionsgrad, welches auch als High-Level-Modell bezeichnet wird. Unter Verwendung einer sogenannten High-Level-Programmiersprache wie C++, Systeme, System-Verilog, etc. können zum Beispiel die funktionalen Komponentenmodelle und Schaltungsmodelle logischer Schaltungen abgefasst, dargestellt und ein funktionales Verhalten der logischen Schaltung sowie der einzelnen Komponenten der logischen Schaltung simuliert werden. Konkret werden dabei z.B. Laufzeiten und/oder Leistungen der einzelnen Funktionskomponenten als Parameter festgelegt, damit sich das Schaltungsmodell während einer Simulation so verhält wie die entsprechende reale Schaltung bzw. ein reales Hardwaremodell.

Ein wichtiges Ziel bei der Entwicklung von komplexen Schaltungen (Systemen) ist die Absicherung gegen Angriffe (Security-Attacken). Um diese zu erschweren bzw. zu vermeiden werden Sicherheitsmaßnahmen in das Design der Schaltung integriert. Damit sollen im System abgespeicherte bzw. verarbeitete sicherheitsrelevante Daten geschützt werden. Um diese Sicherheitsmaßnahmen zu bestimmen und optimal auszulegen, ist eine Analyse des Designs erforderlich. Dabei wird untersucht, welche Komponenten des Systems explizit oder implizit durch Angriffe betroffen sein können und welche Sicherheitsmaßnahmen in welchem Ausmaß für einen jeweiligen Anwendungsfall sinnvoll sind.

Üblicherweise geschieht eine derartige Analyse anhand fortlaufender Inspektionen und Reviews des Systems durch einen Entwickler (Architekten) während eines Entwicklungsprozesses. Bekannt ist auch die Anwendung einer sogenannten Attack-Tree-Analyse.

Aufgrund der zunehmenden Größe und Komplexität logischer Schaltungen wird es zunehmend schwierig, die Auswirkungen möglicher Angriffe auf die Funktionalität und die Sicherheit umfassend zu untersuchen.

Aus der Schrift "Johannes Loinig et al.: Idea: Simulation Based Security Requirement Verification for Transaction Level Models; Engineering Secure Software and Systems, Springer-Verlag, Berlin Heidelberg, Seiten 264 bis 271; 2011" ist ein Verfahren zur Nutzung von Meta-Informationen in Transaction-Level-Modellen für Sicherheitsüberprüfungen von eingebetteten Systemen, welche aus Hardware- und Softwarekomponenten bestehen, bekannt. Dazu wird während einer Designphase des eingebetteten Systems ein Simulationsmodell um einen Sicherheitstest erweitert, wobei jedem Sicherheitsmechanismus einen Meta-Information über sicherheitsfunktionale Anforderungen annotiert wird und diese während der Simulation ausgewertet werden.

Die Schrift "Yves Roudier et al.: SysML-Sec: A SysML environment for the design and development of secure embedded systems; 2013 offenbart eine Systemmodellierungsumgebung, welche die Möglichkeit bietet, während aller Stufen zu intervenieren und die Auswirkungen von Sicherheitsmaßnahmen auf die Sicherheit zu bewerten. Dabei besteht die Möglichkeit Attacken zu modellieren, zu kombinieren und auf entsprechende Einheiten des Systems abzubilden. Es werden beispielsweise Sicherheitsziele, Systemeinheiten (z.B. Prozessoren, Softwareeinheiten, etc.) und Bedrohungen bzw. Sicherheitslücken von ausgewählten Systemeinheiten identifiziert, wobei bei den identifizierten Bedrohungen die Möglichkeiten, die ein Angreifer erfüllen oder überschreiten muss, sowie Informationen über möglichen Ursprung des Angriffs dokumentiert werden.

Aus der Schrift "Johannes Loinig et al.: Towards Formal System-level Verification of Security Requirements during Hardware/Software Codesign; SOC Conference, 2010 IEEE, Seiten 388 - 391" ist weiterhin ein Verfahren für Hardware/Software-Codesign bekannt, bei welchem funktionale Sicherheitsanforderungen während aller Design- und Entwicklungsphasen berücksichtigt werden.

Der Erfindung liegt die Aufgabe zugrunde, das eingangs genannte Verfahren weiterzubilden, um auf einfache Weise und zeitsparend verlässliche Sicherheitsanalysen durchführen zu können und leicht mögliche, auftretende Folgewirkungen erkennen zu können.

Gelöst wird diese Aufgabe mittels eines computergestützten Verfahrens gemäß Anspruch 1. Vorteilhafte Ausgestaltungen und Weiterbildungen der Erfindung sind Gegenstand der abhängigen Ansprüche.

Dabei wird das Schaltungsmodell in einem Verfahrensabschnitt in der Weise um Mechanismen zur Sicherheitsanalyse erweitert, dass der jeweiligen Komponente und/oder dem jeweiligen Kanal zumindest eine definierte Sicherheitseigenschaft zugeordnet wird und dass sicherheitsrelevante Daten mit zumindest einer definierten Sicherheitsanforderung und mit einem Sicherheitsstatus verknüpft werden, und dass in einem weiteren Verfahrensabschnitt mittels einer Simulationseinheit folgende Verfahrensschritte durchgeführt werden:
- Überprüfen, ob die Sicherheitseigenschaft der jeweiligen Komponente und/oder des jeweiligen Kanals der Sicherheitsanforderung und dem Sicherheitsstatus derjenigen sicherheitsrelevanten Daten, welche in der jeweiligen Komponente verarbeitet werden bzw. durch den jeweiligen Kanal geleitet werden, entspricht und bei Nichtentsprechung Generieren eines Sicherheitsrisikoberichts,
- Anwenden eines modellierten Angriffs auf eine Komponente und/oder einen Kanal,
- Bestimmen einer Verletzbarkeit der Sicherheitseigenschaft der Komponente und/oder des Kanals durch den angewandten Angriff und bei gegebener Verletzbarkeit der Sicherheitseigenschaft Generieren eines Angriffsberichts und Ändern des Sicherheitsstatus derjenigen sicherheitsrelevanten Daten, welche zum Zeitpunkt der Anwendung des Angriffs in der jeweiligen Komponente verarbeitet werden bzw. durch den jeweiligen Kanal geleitet werden.

Somit erfolgt bereits im Designstadium anhand einer Simulation eine Sicherheitsanalyse mit Berichten hinsichtlich der Eignung der eingestellten Sicherheitseigenschaften und hinsichtlich der Verletzbarkeit durch einen virtuell ausgeführten Angriff. Erfolgt beispielsweise eine Manipulation von Daten in einer angegriffenen Komponente, wandern diese manipulierten Daten entsprechend der Funktionalität des Schaltungsmodells durch weitere Komponenten. Auch bei diesen Komponenten wird die Verletzbarkeit der Sicherheitseigenschaften infolge einer Verarbeitung der manipulierten Daten bestimmt. Gegebenenfalls können anschließend zur Optimierung des Systems zusätzliche Sicherheitsmaßnahmen eingefügt oder entfernt werden.

Damit ist sichergestellt, dass alle Folgewirkungen von manipulierten Daten erkannt werden und die logische Schaltung ausreichend robust gegenüber allen modellierten und angewendeten Angriffen ist.

Mit diesem computergestützten Verfahren sind auch solche Angriffe überprüfbar, deren Simulationen üblicherweise sehr viel Zeit in Anspruch nehmen, wie beispielsweise die Rekonstruktion kryptographischer Verschlüsselungsalgorithmen. Im vorliegenden Verfahren muss lediglich bestimmt werden, ob der modellierte Angriff ein ausrechendes Potenzial aufweist, um eine definierte Sicherheitseigeneschaft der angegriffenen Komponente zu überwinden. Wenn das der Fall ist, erfolgt eine Bestätigung einer gegebenen Verletzbarkeit mittels eines generierten Angriffsberichts.

Zudem werden mittels Simulationseinheit schon in der Designphase des Schaltungsmodells Abweichungen zwischen den

Sicherheitsanforderungen der Daten und den Sicherheitseigenschaften der Komponenten erkannt und gemeldet.

Von Vorteil ist es, wenn jede Komponente und jeder Kanal mit einer eigenen Simulationseinheit erweitert wird. Diese führt dann während einer Simulation für den jeweiligen Kanal bzw. die jeweilige Komponente die Überprüfungsschritte durch und generiert bei erkannten Sicherheitsrisiken einen entsprechenden Bericht.

Dabei ist es sinnvoll, wenn als Resultat eines angewandten Angriffs Ereignisdaten generiert werden. Diese Ereignisdaten beschreiben eine gegebenenfalls erfolgte Manipulation von Daten, wodurch eine genauere Analyse ermöglicht wird.

In einer weiteren vorteilhaften Ausprägung der Erfindung werden zur Bestimmung der Verletzbarkeit der jeweiligen Sicherheitseigenschaft Wahrscheinlichkeitsdaten generiert. Im Angriffsbericht ist dann angegeben, mit welcher Wahrscheinlichkeit der Angriff erfolgreich ist. Zudem können die Wahrscheinlichkeitsdaten Auskunft darüber geben, wie lange der Angriff voraussichtlich dauert, bis die betroffene Sicherheitseigenschaft verletzt wird.

In weiterer Folge werden sinnvollerweise aus den Wahrscheinlichkeitsdaten Risikodaten zur Bewertung der jeweiligen Sicherheitseigenschaft abgeleitet. Anhand dieser Risikodaten ist auf einfache Weise feststellbar, ob eine Sicherheitseigeneschaft ergänzt werden muss oder vermindert werden kann. Ist zum Beispiel für die zu entwickelnde Schaltung ein tolerierbares Risikoniveau festgelegt, erfolgt zunächst ein Abgleich der Risikodaten mit diesem Risikoniveau. Übersteigt bei einer Komponente das ermittelte Risiko die Vorgabe, muss die Sicherheitseigenschaft ergänzt werden. Im umgekehrten Fall wird damit auch eine überzogene Sicherheitseigeneschaft erkannt.

Eine einfache Weiterbildung der Erfindung sieht vor, dass ein Angriff aus einer zuvor erstellten Bibliothek ausgewählt wird. Damit muss nicht für jeden Anwendungsfall erneut ein Angriff erstellt werden. Vielmehr erfolgt das Modellieren eines Angriffs durch einfache Auswahl aus der Bibliothek und gegebenenfalls durch Anpassungen von Angriffsparametern.

Dabei ist es von Vorteil, wenn jedem Angriff ein Angriffspotenzial und/oder ein Angriffstyp und/oder ein Angriffszeittrigger zugeordnet werden/wird. Anhand dieser Attribute ist ein Angriff in einfacher Weise auswählbar bzw. in geänderter Ausprägung modellierbar.

Um die Effizienz des vorliegenden Verfahrens weiter zu erhöhen, ist in einer Weitereinwicklung vorgesehen, dass ein Angriffsgraph mit mehreren Graphenknoten modelliert wird und dass jeder Graphenknoten einem Angriff entspricht, welcher auf eine bestimmte Komponente und/oder einen bestimmten Kanal angewendet wird. Damit kommen weitere Verfahrensschritte hinzu, in denen zusätzliche Angriffe entsprechend dem modellierten Angriffsgraphen auf einzelne Komponenten bzw. Kanäle angewandt werden und wobei wiederum eine Bestimmung der Verletzbarkeit der jeweiligen Sicherheitseigenschaften der betroffenen Komponenten erfolgt. Aus den festgestellten Auswirkungen der multiplen Angriffe sind die notwendigen Schritte zur Anpassung der Sicherheitsmaßnahmen ableitbar.

Von Vorteil ist in weiterer Folge, wenn mehrere Angriffsgraphen miteinander verknüpft werden, sodass ein Angriffsgraph in Abhängigkeit eines Ausführungsfortschrittes eines anderen Angriffsgraphen ausgeführt wird. Damit wird die Komplexität der anwendbaren Angriffsszenarien weiter gesteigert. Mit dieser zunehmenden Komplexität steigt auch die erzielbare Sicherheit der zu entwickelten Schaltung gegenüber jeglicher Form von Angriffen.

Für das Schaltungsmodell der logischen Schaltung ist günstigerweise vorgesehen, dass dieses als High-Level-Modell, insbesondere als so genanntes Electronic-System-Level-Modell, ausgeführt wird. Während verschiedener Schritte eines Design-Prozesses für eine logische Schaltung, insbesondere für ASICs, werden unterschiedliche Schaltungsmodelle mit unterschiedlichem Abstraktionsgrad kreiert. Mit diesen Schaltungsmodellen können auch unterschiedliche Funktionalitäten der logischen Schaltung getestet werden. Am Beginn eines Design-Prozesses wird ein so genanntes High-Level-Modell oder insbesondere ein so genanntes Electronic-System-Level- oder ESL-Modell, der logischen Schaltung entworfen. Mit diesem Modell können einerseits auf einfache Weise Funktionalitäten, Algorithmen, etc. der einzelnen Komponenten sowie der logischen Schaltung modelliert bzw. funktionale Modelle von Komponenten und Schaltung kreiert werden und andererseits sind die Auswirkungen von Angriffen und die Verletzbarkeit der eingestellten Sicherheitseigenschaften effizient überprüfbar.

Zudem ist es günstig, wenn als logische Schaltung eine integrierte Schaltung, insbesondere eine so genannte anwendungsspezifische, integrierte Schaltung oder ein so genanntes System-on-Chip, vorgesehen wird. Eine integrierte Schaltung kann aus einer Kombination von mehreren elektrisch verbundenen elektronischen Komponenten - meist Halbleiterbauelementen (z.B. Dioden, Transistoren, etc.) und/oder weiteren aktiven wie passiven Bauelementen (z.B. Widerständen, etc.) bestehen. Anwendungen finden integrierte Schaltungen in vielen Bereichen mit hohen Sicherheitsanforderungen, beispielsweise beim Aufbau von Prozessoren, Controllern, Datenspeichern, etc.

Eine spezielle Form integrierter Schaltungen sind die so genannten anwendungsspezifischen, integrierten Schaltungen (ASICs), welche heutzutage in vielen verschiedenen elektronischen Geräten zum Einsatz kommen. Bei einem ASIC wird eine Funktionalität der logischen Schaltung bereits bei der Entwicklung und Herstellung eindeutig festgelegt und ist danach nicht mehr veränderbar. Das bedeutet, ein ASIC weist eine strikte Abhängigkeit von den zu verarbeiteten Daten auf und die in einem ASIC implementierte Logik steht in engem Zusammenhang mit der oder den auszuführenden Funktionen. Daher ist es bei ASICs besonders wichtig, dass auf einfache und kostengünstige Weise bereits in der Design- oder Entwicklungsphase eine Systemsicherheit ermittelt und geprüft wird, ob beispielsweise geforderte oder gewünschte Risikovorgaben eingehalten werden.

Eine weitere Form einer integrierten Schaltung ist das sogenannte System-on-Chip oder Ein-Chip-System. Dabei erfolgt eine Integration aller oder eines großen Teils der Funktionen eines Systems (z.B. embedded Computer, etc.). Als System wird eine Kombination von unterschiedlichen Komponenten wie z.B. logischen Schaltungen, Taktgebung, mikrotechnische Sensoren, Speichereinheiten, Prozessoren, Schnittstellen, Bussystem, etc.) aufgefasst, von welchen zusammen eine bestimmte Funktionalität bereitgestellt wird. Für derartige Ausprägungen ist das Verfahren besonders geeignet, weil hier mit herkömmlichen Methoden aufgrund der zunehmenden Systemgröße und -komplexität nur mehr unzureichende Bewertungen der Sicherheitssituation möglich sind.

Eine weitere günstige Verbesserung sieht vor, dass als logische Schaltung eine so genannte Feld-programmierbare Logikgatter-Anordnung oder ein so genanntes Field Programmable Gate Array vorgesehen wird. Mittels derartiger Feld-programmierbaren Logikgatter-Anordnungen oder FPGAs können durch eine spezifische Konfiguration interner Strukturen (z.B. Gatter, logischer Blöcke, etc.) verschiedene Schaltungen - von einfachen Schaltungen wie z.B. einer Zählerschaltung bis zu hochkomplexen Schaltungen wie z.B. einem Mikroprozessor - realisiert werden. FPGAs werden in allen Bereichen der Digitaltechnik eingesetzt, insbesondere in Bereichen, wo es auf schnelle Signalverarbeitung und eine flexible Änderbarkeit der Schaltung ankommt. Im Vergleich mit anderen logischen Schaltungen, insbesondere ASICs, weisen FPGAs den Vorteil von geringeren Entwicklungskosten und sehr kurzen Implementierungszeiten auf. Ein besondere Vorteil von FPGAs ist, dass sie umkonfigurierbar sind und damit eine mit einem FPGA realisierte logische Schaltung einfach korrigierbar und - falls notwendig - mit Sicherheitsmechanismen erweiterbar ist.

Die Erfindung wird nachfolgend in beispielhafter Weise unter Bezugnahme auf die beigefügten Figuren erläutert. Es zeigen in schematischer Darstellung:
- Fig. 1: Virtuelles Schaltungsmodell einer logischen Schaltung
- Fig. 2: Erweiterung einer Komponente bzw. eines Kanals
- Fig. 3: Bibliothek mit verschiedenen Angriffen
- Fig. 4: verschiedene Angriffsgraphen
- Fig. 5: Angriffsgraph mit Angriffen auf unterschiedliche Komponenten eines Schaltungsmodells
- Fig. 6: Angriffsgraph mit Angriffen auf unterschiedliche Komponenten eines Schaltungsmodells und Verarbeitung sicherheitsrelevanter Daten

Ausgangspunkt des vorliegenden Verfahrens ist ein virtuelles Schaltungsmodell 1 in einer geeigneten rechnerbasierten Simulationsumgebung. Das Schaltungsmodell 1 bildet eine logische Schaltung wie z.B. ein System-on-Chip oder ASIC ab und wird beispielsweise in einer Design- oder Entwicklungsphase als High-Level-Modell (z.B. ESL-Modell) auf System-Level mit einer high-level Programmiersprache wie z.B. SystemC beschrieben.

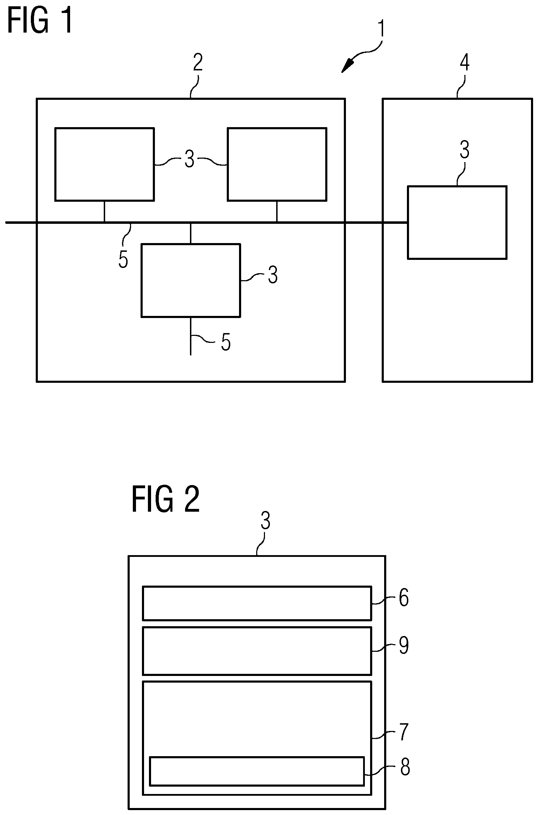

Im Beispiel gemäß Fig. 1 weist das virtuelle Schaltungsmodell 1 in einem ersten Modul 2 drei beispielhafte Komponenten 3 und in einem zweiten Modul 4 eine Komponente 3 auf. Diese Komponenten 3 können z.B. Hardwarekomponenten (z.B. elektronische Bauelemente, etc.) oder Systemkomponenten (z.B. logische Schaltungen, Komponenten mit Hardware- und Softwareanteilen, etc.) sein. Für das Design bzw. die Entwicklung sowie für eine Simulation des Schaltungsmodells 1 der logischen Schaltung - beispielsweise zum Überprüfen der Funktionalität der logischen Schaltung bei einem vorgegebenen Anwendungsfall - wird jede Komponente 3 als funktionales Modell (ebenfalls als High-Level-Modell in einer Programmiersprache wie z.B. Systeme) erstellt. Mit Hilfe der funktionalen Komponentenmodelle kann ein funktionales Verhalten der jeweiligen Komponente 3 simuliert werden. Dabei werden z.B. für jede Komponente 3 Laufzeiten und/oder Leistungen als einstellbare Parameter vorgegeben. Während einer Simulation erfolgt dann die simulierte Datenverarbeitung entsprechend dieser Vorgaben mit Laufzeiten und Leistungen, die annähernd der realen logischen Schaltung entsprechen.

Verbunden sind die Komponenten 3 untereinander und mit externen (nicht dargestellten) Komponenten durch Kanäle 5. Dafür ist in der Regel ein geeigneter Bus vorgesehen.

Eine mit erfindungsgemäßen Attributen erweiterte Komponente 3 ist in Fig. 2 dargestellt. Der Komponente 3 sind definierte Sicherheitseigenschaften 6 (Security Properties) zugeordnet. Bei der Festlegung der Sicherheitseigenschaften 6 kommen beispielsweise in der Datenverarbeitung bekannte Sicherheitskonzepte wie "Vertraulichkeit" (Confidentiality), "Integrität" (Integrity), "Authentizität" (Authenticity) und "Nachweisbarkeit" (Non-Repudiation) zur Anwendung.

Mit den Sicherheitseigenschaften 6 wird also beispielsweise festgelegt, mit welchem Grad an Vertraulichkeit und/oder Integrität und/oder Authentizität und/oder Nachweisbarkeit die jeweilige Komponente 3 Daten verarbeitet. Damit findet eine Klassifizierung jeder einzelnen Komponente 3 hinsichtlich ihrer Sicherheitseigenschaften 6 zum Schutz sicherheitsrelevanter Daten statt.

Dasselbe gilt für einen Kanal 5. Auch hier wird mit definierten Sicherheitseigenschaften 6 festgelegt, mit welchem Grad an Vertraulichkeit und/oder Integrität und/oder Authentizität und/oder Nachweisbarkeit sicherheitsrelevante Daten durch den jeweiligen Kanal 5 übertragen werden.

Zum Beispiel erfolgt die Festlegung der Sicherheitseigenschaften 6 in der Weise, dass in der Simulationsumgebung jede Komponente 3 und jeder Kanal 5 mit Sicherheitsparametern verknüpft wird. Der jeweilige Sicherheitsparameter legt dann z.B. als eine Zahl zwischen 0 und 10 fest, wie hoch der Grad an Vertraulichkeit und/oder Integrität und/oder Authentizität und/oder Nachweisbarkeit etc. ist.

Zur Verarbeitung von sicherheitsrelevanten Daten umfasst die Komponente 3 geeignete Speichereinrichtungen 7. Dabei sind für die sicherheitsrelevanten Daten definierte Sicherheitsanforderungen 8 festgelegt. Konkret handelt es sich um Festlegungen, welcher Grad an Vertraulichkeit und/oder Integrität und/oder Authentizität und/oder Nachweisbarkeit gefordert ist. Auf diese Weise sind auch die mittels der Komponente 3 zu verarbeitenden bzw. mittels eines Kanals 5 zu übertragenden sicherheitsrelevanten Daten klassifiziert. Auch diese Sicherheitsanforderungen 8 sind in der Simulationsumgebung z.B. durch Sicherheitsparameter, welche mit den Daten verknüpft werden, festlegbar.

Zudem sind alle sicherheitsrelevanten Daten mit einem Sicherheitsstatus verknüpft. Dieser Sicherheitsstatus gibt Auskunft darüber, ob die entsprechenden Daten z.B. noch vertrauenswürdig sind ob eine Wahrscheinlichkeit besteht, dass bereits eine Datenmanipulation stattgefunden hat.

Jede Komponente 3 des Schaltungsmodells 1 ist mit einer Simulationseinheit 9 erweitert. Diese überprüft zunächst, ob der Sicherheitsstatus und die Sicherheitsanforderungen 8 der Daten, die in der jeweiligen Komponente 3 verarbeitet werden, den Sicherheitseigenschaften 6 dieser Komponente 3 entspricht. Beispielweise erfordern die Daten einen hohen Grad an Vertraulichkeit, weshalb diese eine Verschlüsselung als Sicherheitsanforderung 8 aufweisen. Werden solche Daten dann unverschlüsselt verarbeitet oder weitergeleitet, herrscht keine Übereinstimmung zwischen den Sicherheitsanforderungen 8 der Daten und den Sicherheitseigeneschaften 6 der betroffenen Komponente 3 oder des betroffenen Kanals 5. Als Resultat einer solchen Nichtentsprechung wird mittels der Simulationseinheit 9 ein Sicherheitsrisikobericht generiert und an eine Ausgabeeinheit geleitet.

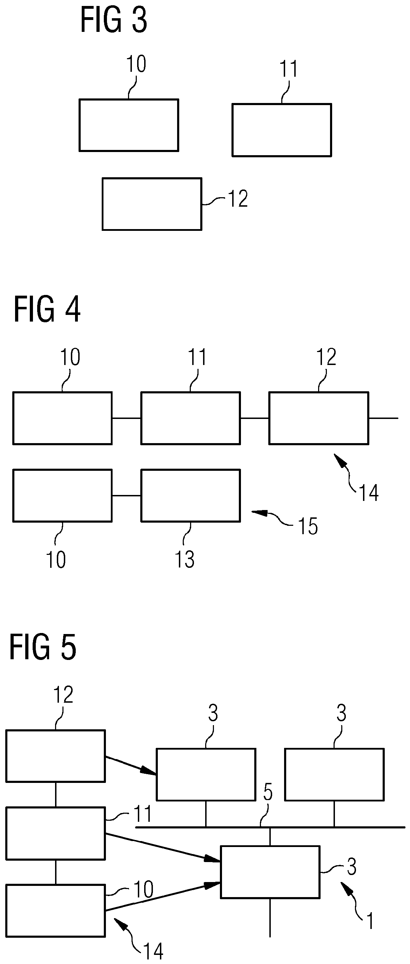

In einem weiteren Verfahrensschritt erfolgt die Modellierung und Anwendung eines Angriffs 10, 11, 12 auf eine Komponente 3 oder einen Kanal 5. Dabei wählt beispielsweise die Simulationseinheit 9 einer Komponente 3 einen Angriff 10, 11, 12 aus einer zuvor erstellten Bibliothek, dargestellt in Fig. 3.

Ein Angriff 10, 11, 12 weist verschiedene Angriffseigenschaften auf, welche beispielsweise von den Klassifizierungen "Vertraulichkeit", "Integrität", "Authentizität" und "Nachweisbarkeit" abgeleitet sind. Zum Beispiel wird als ein Angriffspotenzial die Angriffsstärke festgelegt. Eine weitere Kennzeichnung betrifft den Angriffstyp, beispielsweise "Schlüsselrekonstruktion". Zur Festlegung eines Angriffszeitpunktes wird einem Angriff 10, 11, 12 ein Angriffszeittrigger zugeordnet. Letzterer gibt der Simulationseinheit 9 der jeweiligen Komponente 3 vor, wann ein Angriff ausgelöst ("scharf geschaltet") wird, wodurch der Angriff 10, 11, 12 je nach Konfiguration sofort oder erst später erfolgt.

Das Wesen der vorliegenden Erfindung liegt darin, dass während einer Simulation ein ausgelöster Angriff 10, 11, 12 mit dem virtuellen Schaltungsmodell 1 interagiert. Ein jeweiliger Angriff 10, 11, 12 hat dabei Zugriff auf Daten, wobei Manipulationsmöglichkeiten bestehen. Konkret hängen diese Manipulationsmöglichkeiten davon ab, welche Sicherheitseigenschaften 6 die betroffenen Komponente 3 oder der betroffene Kanal 5 aufweist und welche Angriffseigenschaften der auf diese Komponente 3 bzw. diesen Kanal 5 angewendete Angriff 10, 11, 12 aufweist.

Beispielsweise wird aus der Bibliothek ein Angriff 10 mit Eigenschaften "Schlüsselrekonstruktion" als Angriffstyp, "hoch" als Angriffspotenzial und "sofort" als Angriffszeittrigger ausgewählt. Diese Eigenschaften sind in der Simulationsumgebung beispielsweise als Angriffsparameter einstellbar.

Nach Auswahl dieses Angriffs 10 wird dieser sofort auf eine zugeordnete Komponente 3 angewendet. Weist diese Komponente eine Verschlüsselungseigenschaft auf, deren Stärkegrad geringer als jener des Angriffspotenzials ist (z.B. "mittel"), dann erhält der Angriff 10 Zugriff auf die in dieser Komponente 3 verarbeiteten Daten und kann diese manipulieren. Dementsprechend ändert sich der Sicherheitsstatus dieser Daten und ein Angriffsbericht mit Ereignisdaten wird generiert und an eine Ausgabeeinheit ausgegeben. Dabei besteht die Möglichkeit, eine Wahrscheinlichkeit für den Angriffserfolg anzugeben. Im Sicherheitsstatus der Daten und im Angriffsbericht sind dann entsprechende Wahrscheinlichkeitsdaten angegeben, z.B. dass die Daten mit einer Wahrscheinlichkeit von 70% manipuliert wurden.

Zudem werden als Ereignisdaten im Angriffsbericht eine Kennung des entsprechenden Angriffs, eine Kennung der betroffenen Komponente und ein Zeitpunkt bzw. eine Zeitdauer der Angriffsdurchführung etc. ausgegeben. Es besteht auch die Möglichkeit, für verschiedene Zeitdauern unterschiedliche Wahrscheinlichkeitsdaten zu berechnen. Dabei wird z.B. anhand der Sicherheitsparameter der Komponente 3, der Daten und des Angriffs 10 berechnet, wie lange der Angriff 10 dauern müsste, damit es mit einer bestimmten Wahrscheinlichkeit zu einer Verletzung kommt. In weiterer Folge können aus den Wahrscheinlichkeitsdaten Risikodaten abgeleitet werden. Beispielsweise wird als Resultat einer Angriffssimulation für jede Komponente 3 und jeden Kanal 5 ein Risikowert (Security Risk Number) ausgegeben. Diese Risikowerte geben dann Auskunft darüber, wie verletzungsanfällige die Komponenten 3 und Kanäle 5 gegenüber den angewendeten Angriffen 10-12 sind. Ein Vergleich mit einem geforderten Risikoniveau zeigt dann sofort, wo die Sicherheitsmaßnahmen Schwachstellen aufweisen oder wo gegebenenfalls unnötige Sicherheitsmaßnahmen gesetzt wurden. Zum Beispiel kann durch die Simulation eines Anwendungsfalls gezeigt werden, dass die Ausführung kryptographischer Funktionen in niedrigerem Ausmaß ausreichend ist als anfänglich vermutet, um das System zu schützen.

In einer Weiterbildung der Erfindung können durch Auswahl und Kombination von Angriffen 10, 11, 12, 13 ein oder mehrere Angriffsgraphen 14, 15 gebildet werden, wie in Fig. 4 dargestellt. Dabei hängt beispielsweise die Ausführung eines Angriffsgraphen 14 von der Beendigung eines anderen Angriffsgraphen 15 ab. Die Auslösung eines Angriffsgraphen 14, 15 wendet dabei eine vorgegebene Abfolge von Angriffen 10, 11, 12 bzw. 10, 13 auf das Schaltungsmodell 1 an.

Konkret findet während einer Simulation ein Mapping eines Angriffsgraphen 14 auf das Schaltungsmodell 1 statt, wie in Fig. 5 dargestellt. Dabei können ein Angriff 10-13 oder mehrere Angriffe 10-13 auf eine Komponente 3 oder auf mehrere Komponenten 3 angewendet werden.

Auf diese Weise ist die Möglichkeit geschaffen, verschiedene Anwendungsfälle (Use Cases) auf das virtuelle Schaltungsmodell 1 anzuwenden. Solche Anwendungsfälle können z.B. mit der sogenannten Task-Graph Methode (Platform Architect der Fa. Synopsys) erstellt werden.

Bei der Simulation und Analyse des Schaltungsmodells können verschiedene Angriffsgraphen 14, 15 angewendet werden, wobei durch passende Kombination von Angriffen 10-13 Sicherheitslücken für den simulierten Anwendungsfall aufgezeigt wird. Beispielsweise kann bei einem Angriff 10 ein Task mittels MAC Kontrolle ein Datenpaket prüfen und im Bedarfsfall neu anfordern.

Die Simulationseinheit 9 in der jeweiligen Komponente 3 überwacht das modellierte Schaltungsmodell 1 und meldet Sicherheitsverletzungen mittels entsprechender Berichte über eine Ausgabeeinheit. Somit können Daten und Datenqualität während einer Simulation verfolgt und aufgezeichnet werden. Das erlaubt die Rückverfolgung sicherheitsrelevanter Ereignisse. Zudem erfolgt eine Ermittlung der Auswirkungen durch manipulierte Daten auf das Schaltungsmodell 1.

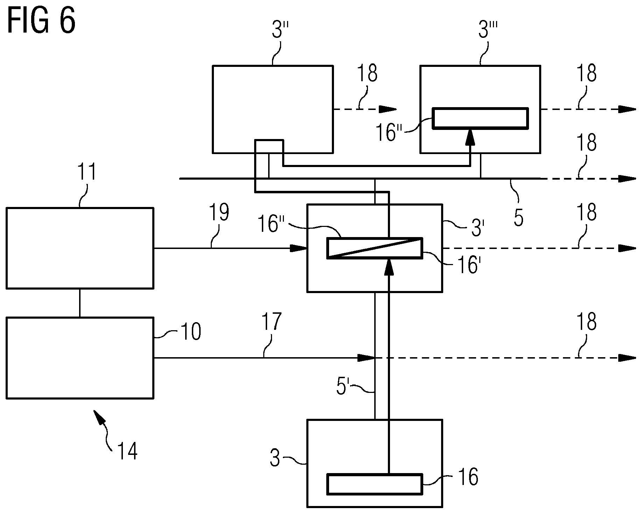

In einer beispielhaften Simulation in Fig. 6 werden vertrauenswürdige Daten 16 durch Angriffe 10, 11 manipuliert. Das Schaltungsmodell 1 besteht dabei aus vier Komponenten 3, 3', 3", 3"', wobei eine erste Komponente 3 mit einer zweiten Komponente 3' über einen erste Bus verbunden ist und wobei die zweite Komponente 3' über einen weiteren Bus mit einer dritten und einer vierten Komponente 3", 3'" verbunden ist.

Zunächst bewirkt ein erster Angriff 10 die Rekonstruktion 17 eines Schlüssels, mit dem der erste Bus zuvor geschützt war.

Damit werden die durch diesen Kanal 5' geleiteten Daten 16 entschlüsselt. Zur Komponente 3' gelangen bereits entschlüsselte Daten 16'. Dieser Simulationsvorgang bewirkt, dass sich der mit den Daten 16' verknüpfte Sicherheitsstatus ändert und dass ein entsprechender Angriffsbericht 18 ausgegeben wird. Darin wird beispielsweise ausgewiesen, dass die zu einem bestimmten Zeitpunkt durch den benannten Kanal 5' geleiteten Daten 16 entschlüsselt wurden.

Durch einen zweiten Angriff 11, welcher gemäß dem vorgegebenen Angriffsgraphen 14 auf die zweite Komponente 3' angewendet wird, erfolgt eine Manipulation 19 der entschlüsselten Daten 16'. In weiterer Folge werden die manipulierten Daten 16" über den weiteren Bus zunächst in die dritte Komponente 3" und schließlich in die vierte Komponente 3'" geleitet. Dabei wird mittels der jeweiligen Simulationseinheit 9 beim Passieren jeder Komponente 3", 3'" und jedes Kanals 5 ein Angriffsbericht 18 generiert und ausgegeben. Damit lässt sich das gesamte System hinsichtlich der Ursachen und der Auswirkungen manipulierter Daten 16" analysieren.

Konkret lässt sich feststellen, ob Komponenten 3, 3', 3", 3'" durch manipulierte Daten abweichendes Verhalten aufweisen. Somit wird durch What-if Analysen bzw. explorative Anwendung von Angriffsgraphen und Sicherheitsmaßnahmen das Design einer logischen Schaltung optimiert.

## Patentansprüche

1. Computergestütztes Verfahren zur Analyse einer logischen Schaltung, welche mehrere Komponenten (3, 3', 3", 3"') und Kanäle (5, 5') zum Austausch von Daten zwischen Komponenten (3, 3', 3", 3"') umfasst, wobei für eine Simulation einer Funktionsweise der logischen Schaltung jeder Komponente (3, 3', 3", 3"') und jedem Kanal (5, 5') in einem Schaltungsmodell (1) funktionale Eigenschaften zugeordnet werden, **dadurch gekennzeichnet, dass** das Schaltungsmodell (1) in einem Verfahrensabschnitt in der Weise um Mechanismen zur Sicherheitsanalyse erweitert wird, dass der jeweiligen Komponente (3, 3', 3", 3"') und/oder dem jeweiligen Kanal (5, 5') zumindest eine definierte Sicherheitseigenschaft (6) zugeordnet wird und dass sicherheitsrelevante Daten (16, 16', 16") mit zumindest einer definierten Sicherheitsanforderung (8) und mit einem Sicherheitsstatus verknüpft werden,
und dass in einem weiteren Verfahrensabschnitt mittels einer Simulationseinheit (9) folgende Verfahrensschritte durchgeführt werden:
- Überprüfen, ob die Sicherheitseigenschaft (6) der jeweiligen Komponente (3, 3', 3", 3"') und/oder des jeweiligen Kanals (5, 5') der Sicherheitsanforderung (8) und dem Sicherheitsstatus derjenigen sicherheitsrelevanten Daten (16, 16', 16"), welche in der jeweiligen Komponente (3, 3', 3", 3"') verarbeitet werden bzw. durch den jeweiligen Kanal (5, 5') geleitet werden, entspricht und bei Nichtentsprechung Generieren eines Sicherheitsrisikoberichts,
- Anwenden eines modellierten Angriffs (10, 11, 12, 13) auf eine Komponente (3, 3', 3", 3"') und/oder einen Kanal (5, 5'),
- Bestimmen einer Verletzbarkeit der Sicherheitseigenschaft (6) der jeweiligen Komponente (3, 3', 3", 3"') und/oder des jeweiligen Kanals (5, 5') durch den angewandten Angriff (10, 11, 12, 13) und bei gegebener Verletzbarkeit der Sicherheitseigenschaft (6) Generieren eines Angriffsberichts (18) und entsprechendes Ändern des Sicherheitsstatus derjenigen sicherheitsrelevanten Daten (16, 16', 16"), welche zum Zeitpunkt der Anwendung des Angriffs in der jeweiligen Komponente (3, 3', 3", 3"') verarbeitet werden bzw. durch den jeweiligen Kanal (5, 5') geleitet werden.

2. Computergestütztes Verfahren nach Anspruch 1, **dadurch gekennzeichnet, dass** jede Komponente (3, 3', 3", 3"') und jeder Kanal (5, 5') mit einer Simulationseinheit (9) erweitert wird.

3. Computergestütztes Verfahren nach Anspruch 1 oder 2, **dadurch gekennzeichnet, dass** als Resultat des angewandten Angriffs (10, 11, 12, 13) Ereignisdaten generiert werden.

4. Computergestütztes Verfahren nach einem der Ansprüche 1 bis 3, **dadurch gekennzeichnet, dass** zur Bestimmung der Verletzbarkeit der jeweiligen Sicherheitseigenschaft (6) Wahrscheinlichkeitsdaten generiert werden.

5. Computergestütztes Verfahren nach Anspruch 4, **dadurch gekennzeichnet, dass** aus den Wahrscheinlichkeitsdaten Risikodaten zur Bewertung der jeweiligen Sicherheitseigenschaft (6) abgeleitet werden.

6. Computergestütztes Verfahren nach einem der Ansprüche 1 bis 5, **dadurch gekennzeichnet, dass** ein Angriff (10, 11, 12, 13) aus einer zuvor erstellten Bibliothek ausgewählt wird.

7. Computergestütztes Verfahren nach einem der Ansprüche 1 bis 6, **dadurch gekennzeichnet, dass** jedem Angriff (10, 11, 12, 13) ein Angriffspotenzial und/oder ein Angriffstyp und/oder ein Angriffszeittrigger zugeordnet werden/wird.

8. Computergestütztes Verfahren nach einem der Ansprüche 1 bis 7, **dadurch gekennzeichnet, dass** ein Angriffsgraph (14, 15) mit mehreren Graphenknoten modelliert wird und dass jeder Graphenknoten einem Angriff (10, 11, 12, 13) entspricht, welcher auf eine bestimmte Komponente (3, 3', 3", 3"') und/oder einen bestimmten Kanal (5, 5') angewendet wird.

9. Computergestütztes Verfahren nach Anspruch 8, **dadurch gekennzeichnet, dass** mehrere Angriffsgraphen (14, 15) miteinander verknüpft werden, sodass ein Angriffsgraph (14, 15) in Abhängigkeit eines Ausführungsfortschrittes eines anderen Angriffsgraphen (14, 15) ausgeführt wird.

10. Computergestütztes Verfahren nach einem der Ansprüche 1 bis 9, **dadurch gekennzeichnet, dass** das Schaltungsmodell (1) der logischen Schaltung als High-Level-Modell, insbesondere als so genanntes Electronic System-Level-Modell, ausgeführt wird.

11. Computergestütztes Verfahren nach einem der Ansprüche 1 bis 10, **dadurch gekennzeichnet, dass** als logische Schaltung eine integrierte Schaltung, insbesondere eine so genannte anwendungsspezifische, integrierte Schaltung oder ein so genanntes System-on-Chip, vorgesehen wird.

12. Computergestütztes Verfahren nach einem der Ansprüche 1 bis 11, **dadurch gekennzeichnet, dass** als logische Schaltung eine so genannte Feld-programmierbare Logikgatter-Anordnung oder ein so genanntes Field Programmable Gate Array vorgesehen wird.

## Claims

1. Computer-assisted method for analysis of a logic circuit comprising a number of components (3, 3', 3", 3"') and channels (5, 5') for interchange of data between components (3, 3', 3", 3"'), wherein, for a simulation of a way in which the logic circuit functions, each component (3, 3', 3", 3"') and each channel (5, 5') is assigned functional properties in a circuit model (1), **characterised in that** the circuit model (1), in a section of the method, is expanded by mechanisms for security analysis in a way by which the respective component (3, 3', 3", 3"') and/or the respective channel (5, 5') is assigned at least one defined security property (6) and that security-relevant data (16, 16', 16") is linked to at least one defined security requirement (8) and to a security status,
and that in a further section of the method the following method steps are carried out by means of a simulation unit (9) :
- Checking whether the security property (6) of the respective component (3, 3', 3", 3"') and/or the respective channel (5, 5') corresponds to the security requirement (8) and the security status of the security-relevant data (16, 16', 16") which is processed in the respective component (3, 3', 3", 3"') or conveyed through the respective channel (5, 5') and generating a security risk report if it does not correspond thereto,
- Applying a modelled attack (10, 11, 12, 13) to a component (3, 3', 3", 3"') and/or to a channel (5, 5'),
- Determining a vulnerability of the security property (6) of the respective component (3, 3', 3", 3"') and/or of the respective channel (5, 5') to the applied attack (10, 11, 12, 13) and if there is vulnerability of the security property (6), generation of an attack report (18) and correspondingly changing the security status of the security-relevant data (16, 16', 16") which is being processed in the respective component (3, 3', 3", 3"') or conveyed through the respective channel (5, 5') at the point in time of applying the attack.

2. Computer-assisted method according to claim 1, **characterised in that** each component (3, 3', 3", 3"') and each channel (5, 5') is expanded with a simulation unit (9).

3. Computer-assisted method according to claim 1 or 2, **characterised in that** event data is generated as the result of the applied attack (10, 11, 12, 13).

4. Computer-assisted method according to one of claims 1 to 3, **characterised in that** probability data is generated to determine the vulnerability of the respective security property (6).

5. Computer-assisted method according to claim 4, **characterised in that** risk data for evaluating the respective security property (6) is derived from the probability data.

6. Computer-assisted method according to one of claims 1 to 5, **characterised in that** an attack (10, 11, 12, 13) is selected from a previously created library.

7. Computer-assisted method according to one of claims 1 to 6, **characterised in that** each attack (10, 11, 12, 13) is assigned an attack potential and/or and attack type and/or an attack time trigger.

8. Computer-assisted method according to one of claims 1 to 7, **characterised in that** an attack graph (14, 15) with a number of graph nodes is modelled and that each graph node corresponds to an attack (10, 11, 12, 13) that is applied to a specific component (3, 3', 3", 3"') and/or to a specific channel (5, 5').

9. Computer-assisted method according to claim 8, **characterised in that** a number of attack graphs (14, 15) are linked to one another, so that one attack graph (14, 15) is executed as a function of the progress of the execution of another attack graph (14, 15).

10. Computer-assisted method according to one of claims 1 to 9, **characterised in that** the circuit model (1) of the logic circuit is embodied as a high-level model, especially as a so-called electronic system-level model.

11. Computer-assisted method according to one of claims 1 to 10, **characterised in that** an integrated circuit, especially a so-called Application-Specific Integrated Circuit or a so-called system-on-chip is provided as the logic circuit.

12. Computer-assisted method according to one of claims 1 to 11, **characterised in that** a so-called Field Programmable Gate Array is provided as the logic circuit.

## Revendications

1. Procédé informatisé d'analyse d'un circuit logique qui comprend plusieurs composants (3, 3', 3", 3"') et des canaux (5, 5') pour échanger des données entre des composants (3, 3', 3", 3"'), dans lequel des caractéristiques fonctionnelles sont affectées à chaque composant (3, 3', 3", 3"') et à chaque canal (5, 5') dans un modèle de circuit (1) pour simuler un fonctionnement du circuit logique,
**caractérisé en ce que** le modèle de circuit (1) est complété avec des mécanismes d'analyse de sécurité dans une section du procédé de telle manière qu'au moins une caractéristique de sécurité (6) définie est affectée au composant respectif (3, 3', 3", 3"') et/ou au canal respectif (5, 5'), et que des données liées à la sécurité (16, 16', 16") sont associées à au moins une exigence de sécurité (8) définie et à au moins un état de sécurité, et **en ce que** les étapes du procédé suivantes sont exécutées dans une autre section du procédé au moyen d'une unité de simulation (9):
- vérification si la caractéristique de sécurité (6) du composant respectif (3, 3', 3", 3"') et/ou du canal respectif (5, 5') correspond à l'exigence de sécurité (8) et à l'état de sécurité des données liées à la sécurité (16, 16', 16") qui sont traitées dans le composant respectif (3, 3', 3", 3"') resp. sont acheminées par le canal respectif (5, 5') et, en cas de non correspondance, génération d'un rapport de risque pour la sécurité,
- application d'une attaque modélisée (10, 11, 12, 13) sur un composant (3, 3', 3", 3"') et/ou un canal (5, 5'),
- détermination d'une vulnérabilité de la caractéristique de sécurité (6) du composant respectif (3, 3', 3", 3"') et/ou du canal respectif (5, 5') par l'attaque appliquée (10, 11, 12, 13), et en cas de vulnérabilité déterminée, génération d'un rapport d'attaque (18) et modification correspondante de l'état de sécurité des données liées à la sécurité (16, 16', 16") qui sont traitées dans le composant respectif (3, 3', 3", 3"') resp. sont acheminées par le canal respectif (5, 5') au moment de l'application de l'attaque.

2. Procédé informatisé selon la revendication 1, **caractérisé en ce que** chaque composant (3, 3', 3", 3"') et chaque canal (5, 5') est complété avec une unité de simulation (9) .

3. Procédé informatisé selon la revendication 1 ou 2, **caractérisé en ce que** des données d'événement sont générées en tant que résultat de l'attaque appliquée (10, 11, 12, 13).

4. Procédé informatisé selon l'une des revendications 1 à 3, **caractérisé en ce que** des données de probabilité sont générées pour déterminer la vulnérabilité de la caractéristique de sécurité (6) respective.

5. Procédé informatisé selon la revendication 4, **caractérisé en ce que** des données de risque destinées à évaluer la caractéristique de sécurité (6) respective sont déduites à partir des données de probabilité.

6. Procédé informatisé selon l'une des revendications 1 à 5, **caractérisé en ce qu'**une attaque (10, 11, 12, 13) est sélectionnée à partir d'une bibliothèque créée préalablement.

7. Procédé informatisé selon l'une des revendications 1 à 6, **caractérisé en ce qu'**un potentiel d'attaque et/ou un type d'attaque et/ou un déclencheur de temps d'attaque est attribué à chaque attaque (10, 11, 12, 13).

8. Procédé informatisé selon l'une des revendications 1 à 7, **caractérisé en ce qu'**un graphique d'attaque (14, 15) comportant plusieurs noeuds graphiques est modélisé et **en ce que** chaque noeud graphique correspond à une attaque (10, 11, 12, 13) qui est appliquée sur un composant déterminé (3, 3', 3", 3"') et/ou un canal déterminé (5, 5').

9. Procédé informatisé selon la revendication 8, **caractérisé en ce que** plusieurs graphiques d'attaque (14, 15) sont associés ensemble de telle manière qu'un graphique d'attaque (14, 15) est exécuté en fonction de l'avancement de l'exécution d'un autre graphique d'attaque (14, 15).

10. Procédé informatisé selon l'une des revendications 1 à 9, **caractérisé en ce que** le modèle de circuit (1) du circuit logique est exécuté sous forme de modèle de haut niveau, notamment sous forme de ce que l'on nomme un modèle au niveau système électronique.

11. Procédé informatisé selon l'une des revendications 1 à 10, **caractérisé en ce qu'**en tant que circuit logique, il est prévu un circuit intégré, notamment un circuit intégré à application spécifique ou ce que l'on nomme un système sur puce.

12. Procédé informatisé selon l'une des revendications 1 à 11, **caractérisé en ce qu'**en tant que circuit logique, il est prévu ce que l'on nomme un agencement de portes logiques programmable par l'utilisateur ou un réseau de portes programmable par l'utilisateur.
